# FASCICULE DE BREVET EUROPEEN

(11) **EP 0 675 438 B1**
(45) Date de publication et mention de la délivrance du brevet: **23.12.1998**
(21) Numéro de dépôt: 95400511.2
(22) Date de dépôt: 10.03.1995
(51) Int. Cl.: G06F 11/273, G06F 11/277

(54) **Procédé et dispositif pour la détection de pannes sur des cartes électroniques**
Verfahren und Einrichtung zum Fehlernachweis auf elektronischen Platinen
Method and device for error detection on electronic boards

(30) Priorité: 31.03.1994 FR 9403943
(43) Date de publication de la demande: 04.10.1995
(73) Titulaire: SEXTANT AVIONIQUE, 92366 Meudon la Forêt Cédex (FR)
(72) Inventeur: Ducateau, Michel, F-28210 Nogent Le Roi (FR)
(74) Mandataire: de Saint-Palais, Arnaud Marie

(56) Documents cités:
- EP-A- 0 113 393
- EP-A- 0 496 509
- EP-A- 0 498 118
- INTERNATIONAL TEST CONFERENCE 1988 PROCEEDINGS, 12 - 14 SEPTEMBER 1988, WASHINGTON US, pages 888-897, XP 000013130 S. Y. H. SU ET AL. 'Designs for diagnosability and reliability in VLSI systems'

## Description

La présente invention concerne un procédé et un dispositif pour la détection de panne sur des cartes électroniques telles que, par exemple, celles qui sont utilisées dans les équipements embarqués à bord d'aérodynes.

Elle a plus particulièrement pour but de réduire à la fois le temps de détection des pannes, ainsi que le taux de pannes indétectées de ces cartes et donc de ces équipements.

A l'heure actuelle, en vue d'améliorer ces deux paramètres (temps et taux) sur les équipements aéronautiques, deux mesures utilisées séparément ou en combinaison sont envisageables, à savoir :
- une première mesure consistant à renforcer les programmes de test par des logiciels spécifiques des matériels à tester,
- une deuxième mesure consistant à utiliser des architectures redondantes dans lesquelles l'ensemble de la fonction électronique et le logiciel applicatif associé sont dupliqués, une ou plusieurs fois.

Or, l'évolution des systèmes avioniques vers des architectures modulaires intégrées qui concentrent dans un même calculateur ou étagère, une structure informatique complexe incluant de nombreux modules d'unité centrale et d'entrée/sortie, conçus pour des applications avioniques à haut niveau de criticité, exige une excellente tenue aux critères de sûreté de fonctionnement et de sécurité (en particulier, le taux de pannes indétectées).

On constate que l'usage de redondances multiples conduit à des coûts prohibitifs qui discréditent le concept d'avionique modulaire intégrée. En outre, le renforcement des programmes de test a pour effet d'augmenter de façon significative la charge des unités centrales, sans pour autant offrir un bon niveau de couverture et un temps de détection pleinement satisfaisant (ce temps dépend habituellement de la complexité des programmes).

Par ailleurs, le document EP-A-0 498 118 divulgue un dispositif permettant de surveiller en continu plusieurs signaux provenant de sources différentes. Ce dispositif comprend une horloge interne permettant de cadencer l'échantillonnage des signaux à surveiller en vue de calculer des sommes de contrôle sur ces signaux, la fréquence d'échantillonnage étant constante. Un tel dispositif ne permet donc pas la surveillance de n'importe quel signal, et en particulier les signaux ayant une fréquence inférieure à la fréquence d'échantillonnage. En outre, cette horloge n'est pas synchronisée sur les signaux à surveiller. Il en résulte un caractère aléatoire dans les valeurs des sommes de contrôle obtenues.

La présente invention a pour but de supprimer ces inconvénients, notamment en améliorant le taux de détection de pannes, sans avoir à utiliser une architecture redondante.

A cet effet, elle propose un procédé pour la détection de pannes sur un équipement électronique, mis en oeuvre par un dispositif de contrôle comprenant des moyens de sélection de signaux raccordés aux équipotentielles dudit équipement, des moyens de commande et de calcul de sommes de contrôle et de comparaison, caractérisé en ce qu'il comprend au moins une séquence de test comportant :
- la sélection d'un signal d'horloge d'échantillonage et d'un groupe d'équipotentielles associé à une équipotentielle qui fournit, le signal d'horloge d'échantillonnage,
- l'échantillonnage au rythme du signal d'horloge selectionné pendant une durée prédéterminée, des signaux transitant dans les équipotentielles du groupe sélectionné,
- le calcul d'une somme de contrôle à partir des signaux échantillonnés,
- la comparaison de la somme de contrôle calculée avec une valeur de référence lue dans une mémoire du dispositif de contrôle, et
- l'émission d'un signal de défaut si une différence est constatée lors de ladite comparaison.

Ce procédé est mis en oeuvre par un dispositif indépendant de l'équipement électronique à surveiller. Il est donc susceptible de fonctionner en parallèle avec ce dernier, et n'utilise pas les ressources de l'équipement qu'il surveille.
En outre, il permet de décharger l'équipement des opérations de test, et d'éviter les compléments matériels classiquement utilisés notamment pour tester les sorties de l'équipement, tout en offrant des possibilités de contrôle étendues dans la mesure où le dispositif de contrôle a potentiellement accès à tous les signaux de l'équipement. Selon une particularité de l'invention, ce procédé comprend :
- un mode primaire déclenché par la mise sous tension dudit équipement au cours duquel ladite séquence de test est déroulée successivement sur un ensemble de fonctions prédéterminées de l'équipement, et
- un mode élaboré déclenché par l'équipement pour dérouler la séquence de test sur une fonction et pendant une durée indiquées par l'équipement.

Un mode de réalisation du procédé selon l'invention sera décrit ci-après, à titre d'exemple non limitatif, avec référence aux dessins annexés dans lesquels :
La figure 1 représente schématiquement le dispositif de contrôle mettant en oeuvre le procédé selon l'invention, connecté à l'équipement électronique à tester ;
la figure 2 montre un schéma plus détaillé du dispositif de contrôle ;
la figure 3 représente le circuit logique de calcul de sommes de contrôle du dispositif de contrôle.

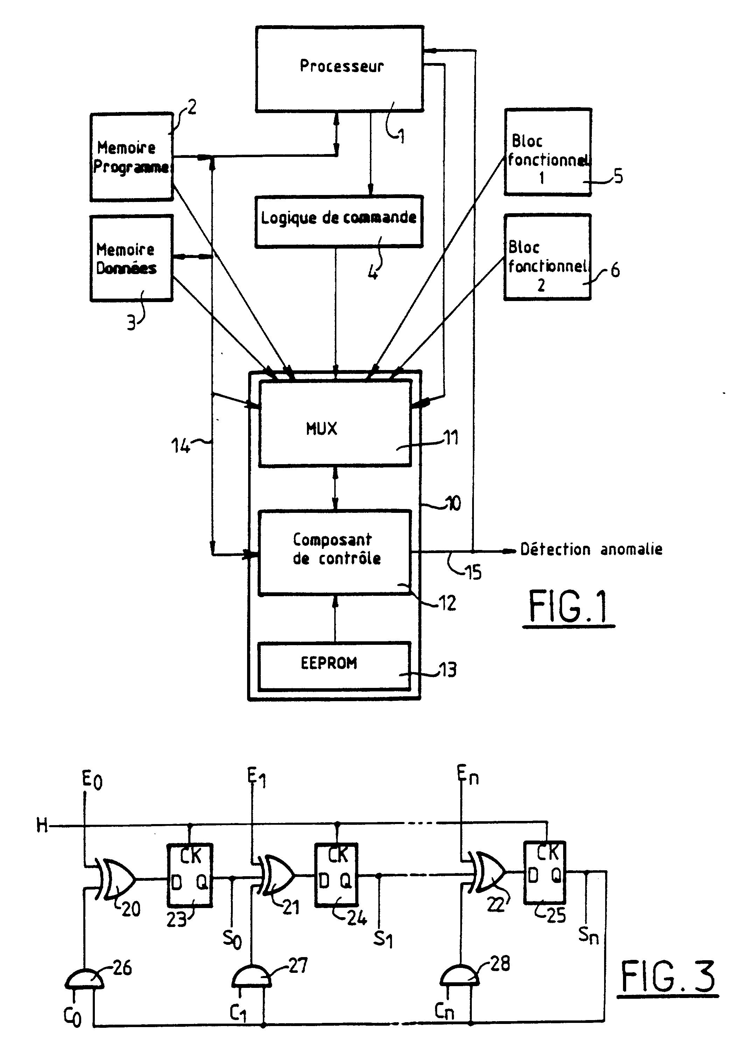

Tel que représenté sur la figure 1, le dispositif de contrôle 10 est raccordé à un équipement électronique comprenant un processeur 1, des mémoires 2,3 destinées au stockage du programme et des données utilisées par le processeur 1, un circuit logique de commande 4, et deux blocs fonctionnels 5,6.

Le dispositif de contrôle 10 comprend un multiplexeur 11 raccordé aux équipotentielles de l'équipement à tester et aux bus 14 de transfert d'adresses et de données, et un circuit de commande et de calcul 12 connecté à la fois au multiplexeur 11, aux bus de transfert d'adresses 14, et à une mémoire 13 dans laquelle sont stockées toutes les valeurs de référence des sommes de contrôle à effectuer.

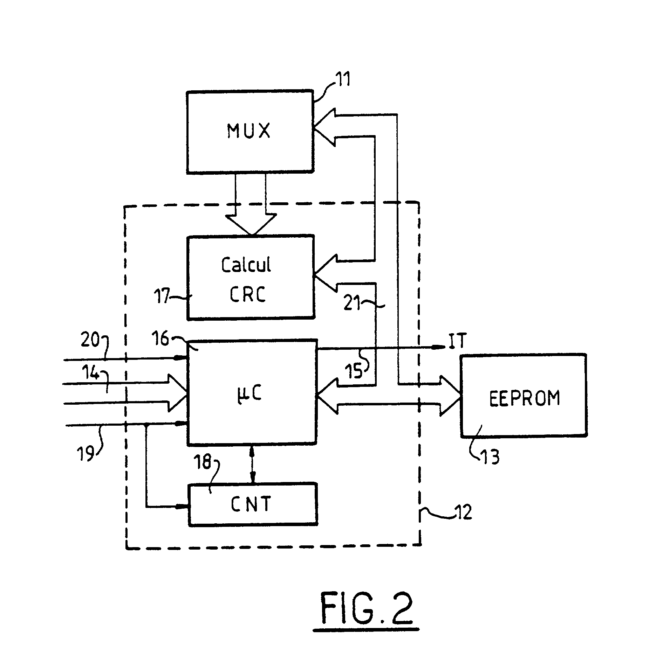

Sur la figure 2, le circuit de commande et de calcul comprend un circuit logique 17 de calcul de somme de contrôle et un micro-contrôleur 16 chargé de communiquer avec l'équipement à tester, notamment par l'intermédiaire du bus mémoire 14, de contrôler le déroulement des tests, et d'effectuer les comparaisons des sommes de contrôle calculées avec les valeurs de référence stockées dans la mémoire 13. A cet effet, le micro-contrôleur 16 est relié par l'intermédiaire d'un bus 21, à la mémoire 13, à la sortie du circuit de calcul 17 des sommes de contrôle et à l'interface de commande du multiplexeur 11. Par ailleurs, la sortie du multiplexeur 11 est raccordée à l'entrée du circuit de calcul 17.

Ce dispositif 10 comprend deux modes d'activation : un mode primaire et un mode élaboré.

L'activation en mode élaboré est réalisée à partir d'un ordre d'activation déclenché par l'exécution d'une instruction incluse soit dans un programme applicatif, soit dans le logiciel de test en mode opérationnel. Cet ordre correspond à l'écriture d'un code correspondant à un ordre, à une adresse reconnue par le micro-contrôleur 16.

En fonction de l'ordre ainsi reçu, le micro-contrôleur 16 envoie un ordre de sélection approprié au multiplexeur 11 par l'intermédiaire du bus 21 pour sélectionner un groupe déterminé d'équipotentielles auquel est associé une équipotentielle qui fournit le signal d'horloge d'échantillonnage. Dans le cas où le groupe d'équipotentielles correspond à un bus mémoire, le signal d'horloge associé peut être, par exemple, le signal d'acquittement qui indique la fin d'un accès à la mémoire.

On peut également utiliser une horloge d'échantillonnage très rapide et autonome pour vérifier un fonctionnement sain des organes vitaux de l'équipement électronique, lors de premières séquences de test de l'équipement.

A partir de l'ordre d'activation et à chaque période du signal d'horloge d'échantillonnage, le circuit de calcul des sommes de contrôle 17 prélève un échantillon de chacun des signaux transitant dans les équipotentielles sélectionnées par le multiplexeur 11. Un résultat de ce calcul est élaboré progressivement à l'aide de ces échantillons prélevés, jusqu'à ce que le micro-contrôleur 16 reçoive un ordre de fin d'activation du processeur 1 par l'intermédiaire du bus mémoire 14.
Cet ordre de fin d'activation peut par exemple être constitué par un signal écrit sur le bus de transfert d'adresses demandant l'accès à une adresse prédéterminée connue du micro-contrôleur 16.
A la suite de cet ordre de fin d'activation, le micro-contrôleur 16 écrit sur le bus mémoire 14, la valeur de la somme de contrôle calculée et va ensuite rechercher dans la mémoire 13, la valeur de référence pour la comparer avec celle calculée. En cas de différence, le micro-contrôleur 16 émet un signal d'interruption sur une liaison 15 vers le processeur 1, et avantageusement, arme un signal à destination d'un système de maintenance externe.
A la suite de cette dernière opération, le micro-contrôleur 16 se met dans un état inactif, en attente d'un nouvel ordre d'activation.

Comme précédemment mentionné, le dispositif de contrôle 10 comprend en outre un mode de fonctionnement primaire activé lors de l'initialisation du processeur 1. Cette activation qui est appliquée directement au micro-contrôleur 16, est réalisée par une liaison 20 avec la carte électronique de l'équipement.
Si un signal d'activation est présent sur cette liaison 20, par exemple, lors de la mise sous tension du processeur 1, le micro-contrôleur 16 est activé en mode primaire pour dérouler automatiquement une séquence définie à partir d'une configuration par défaut contenue dans la mémoire 13 à une adresse prédéterminée. Le dispositif de contrôle 10 comprend un compteur 18 relié à l'horloge de l'équipement par l'intermédiaire d'une liaison 19, pour décompter le temps à partir de son activation dans ce mode, de manière à se désactiver automatiquement au bout d'un certain temps.
Au cours de cette séquence, le micro-contrôleur 16 lit séquentiellement la mémoire 13 à partir d'une adresse prédéterminée et déclenche des calculs de sommes de contrôle sur les différents groupes d'équipotentielles indiqués dans cette mémoire, puis calcule une somme globale par composition des différentes sommes obtenues sur les différents groupes.

Il va de soi que cette séquence est organisée de manière à analyser progressivement l'équipement, les organes et fonctions de l'équipement testées en premier servant au test des autres fonctions. Ainsi, par exemple, il est avantageux de commencer par tester d'abord une horloge autonome et rapide pour s'assurer du bon fonctionnement du processeur 1, du bus mémoire et de sa logique de commande 4.
Cette démarche permet de valider les organes et le protocole de communication entre le processeur 1 et le dispositif de contrôle 10.

Si, le compteur 18 arrive à échéance, ou si, en fin cette séquence, la somme globale ne correspond pas à celle qui doit être obtenue et qui est contenue dans la mémoire 13, le micro-contrôleur 16 envoie un signal de détection de panne au processeur 1 et vers le système de maintenance, et se met en attente d'un nouvel ordre d'activation.

Par ailleurs, il est possible que la séquence de programme qui a déclenché le dispositif de contrôle 10 en mode élaboré soit interrompue pour exécuter une autre tâche. Dans ce cas, le processeur 1 ne peut plus contrôler la durée du test et envoyer au bon moment l'ordre de désactivation. Il envoie donc au micro-contrôleur 16 un ordre d'abandon du calcul de somme de contrôle en cours. Cet ordre est à ajouter systématiquement soit en tête de chaque programme d'interruption, soit dans la séquence de code de l'algorithme de choix d'une tâche (scheduler) dans le cas d'un exécutif temps réel.

La mémoire 13 contient une multiplicité d'ensembles de données regroupant :
- un numéro de test,
- la liste des numéros des équipotentielles du groupe à d'équipotentielles à tester,
- le numéro de l'équipotentielle fournissant le signal d'horloge d'échantillonnage, et
- la valeur de la somme de contrôle de référence.

En mode d'activation élaboré, le numéro du test permet au processeur 1 de sélectionner les signaux à observer entre les ordres d'activation et de désactivation, en fonction de la séquence de programme qu'il exécute.

Plusieurs de ces ensembles de données peuvent être associés à une somme de contrôle globale. Ainsi, par exemple pour l'exécution du mode primaire, cette mémoire contient, à partir d'une adresse prédéterminée, successivement tous les ensembles de données définissant les groupes à tester, suivis d'une somme de contrôle globale.
Dans ce mode, la mémoire 13 est lue séquentiellement par le micro-contrôleur 16 à partir de l'adresse prédéterminée, jusqu'à la valeur de référence de la somme de contrôle globale.

En outre, un même groupe d'équipotentielles peut être mémorisé plusieurs fois dans cette mémoire de manière à être associé à différentes fréquences d'échantillonnage. Cette disposition permet d'obtenir des niveaux de test différents, la finesse du test étant fonction de la valeur de la fréquence d'échantillonnage.

Cette mémoire 13 est de type non volatile, par exemple de type EEPROM, et est chargée lors de la fabrication de l'équipement auquel elle est associée.

Pour définir son contenu, il convient tout d'abord d'établir la liste des tests que l'on désire effectuer sur l'équipement, et d'associer à chaque test un numéro de commande, un numéro d'équipotentielle fournissant le signal d'horloge et la liste des équipotentielles du groupe à tester. Ensuite, il s'agit de dérouler successivement tous les tests ainsi définis sur un équipement réputé en bon fonctionnement pour récupérer les sommes de contrôle délivrées sur le bus mémoire 14 par le micro-contrôleur 16 et d'écrire ces valeurs comme valeurs de référence dans la mémoire 13.

Avantageusement, le circuit de calcul des sommes de contrôle 17 applique la technique d'encodage des sommes de contrôle de type CRC (Cyclic Redondancy Check). Cette technique permet de mémoriser sous une forme très compacte les signaux et informations de référence que l'on doit détecter au niveau des différents éléments de l'équipement à tester. Par ailleurs, le taux de couverture de panne obtenu par cette technique est très nettement supérieur à une somme binaire classique.

Pour mettre en oeuvre cette technique, le circuit 12 comprend un bloc de calcul conçu pour effectuer une division polynomiale de la séquence des données reçues, par un polynôme dit premier, c'est-à-dire, qui ne possède pas d'autres polynômes diviseurs que lui-même et 1.

Tel que représenté sur la figure 2, ce bloc de calcul qui est conçu pour traiter n signaux E₀,E₁,...Eₙ, comprend de façon classique n portes OU EXCLUSIF 20,21,22 à l'entrée desquelles sont appliqués respectivement les n signaux E₀,E₁,...Eₙ. Les sorties de ces portes sont raccordées respectivement aux entrées respectives de n bascules D 23,24,25 cadencées par le signal d'horloge d'échantillonnage H. Les sorties Q des n-1 premières bascules D 23,24 sont appliquées respectivement à l'entrée de n-1 21,22 des n portes OU EXCLUSIF, tandis que la sortie Q de la dernière bascule D 25 est appliquée à l'entrée de n portes ET 26,27,28. Par ailleurs, les valeurs C₁,C₂,...Cₙ respectives des coefficients du polynôme premier sont appliquées respectivement à l'autre entrée des n portes ET 26,27,28 dont les sorties sont raccordées respectivement à l'entrée des n portes OU EXCLUSIF 20,21,22.
Le résultat de la somme de contrôle est fourni en S₁,S₂,...Sₙ aux sorties Q des n bascules D 23,24,25, et il est lu par le circuit de contrôle 12 lors de la réception de l'ordre de désactivation.

## Revendications

1. Procédé pour la détection de pannes sur un équipement électronique, mis en oeuvre par un dispositif de contrôle (10) comprenant des moyens de sélection (11) de signaux, raccordés aux équipotentielles dudit équipement, des moyens (12) de commande, et des moyens de calcul de sommes de contrôle et de comparaison,
caractérisé en ce qu'il comprend au moins une séquence de test comportant :
- la sélection d'un signal d'horloge d'échantillonnage et d'un groupe d'équipotentielles associé à une équipotentielle qui fournit le signal d'horloge d'échantillonnage,
- l'échantillonnage au rythme du signal d'horloge sélectionné, pendant une durée prédéterminée, des signaux transitant dans les équipotentielles du groupe sélectionné,
- le calcul d'une somme de contrôle à partir des signaux échantillonnés,
- la comparaison de la somme de contrôle calculée avec une valeur de référence lue dans une mémoire (13) du dispositif de contrôle (10), et
- l'émission d'un signal de défaut si une différence est constatée lors de ladite comparaison.

2. Procédé selon la revendication 1,
caractérisé en ce qu'il comprend :
- un mode primaire déclenché par la mise sous tension dudit équipement, au cours duquel ladite séquence de test est déroulée successivement sur un ensemble de fonctions prédéterminées de l'équipement, et
- un mode élaboré déclenché par l'équipement pour dérouler la séquence de test sur une fonction et pendant une durée indiquées par l'équipement.

3. Procédé selon l'une des revendication 1 et 2, caractérisé en ce qu'il comprend le calcul d'une somme de contrôle globale à partir des sommes de contrôle obtenues à la suite de l'exécution d'une série de séquences de test.

4. Procédé selon l'une des revendications précédentes 2 et 3,
caractérisé en ce qu'il comprend, en mode élaboré, l'émission par l'équipement à tester d'un ordre d'activation déclenchant une séquence de test au cours de laquelle une somme de contrôle est calculée progressivement, puis l'émission d'un ordre de désactivation par l'équipement qui déclenche la comparaison de la somme de contrôle calculée avec la valeur de référence correspondante lue dans ladite mémoire (13).

5. Procédé selon l'une des revendications précédentes,
caractérisé en ce qu'il comprend l'émission par l'équipement à tester d'un ordre d'abandon de la séquence de test en cours, dans le cas où la séquence de programme en cours d'exécution par l'équipement est interrompue pour effectuer une autre tâche.

6. Procédé selon l'une des revendications précédentes,
caractérisé en ce qu'il comprend l'émission par le dispositif de contrôle (10) vers l'équipement à tester, de la valeur de la somme de contrôle calculée.

7. Procédé selon l'une des revendications précédentes,
caractérisé en ce que, pour calculer les sommes de contrôle, il applique une technique de calcul de type CRC (Cyclic Redundancy Check) consistant à effectuer des divisions polynomiales des échantillons des signaux reçus, par un polynôme premier.

8. Dispositif pour la mise en oeuvre du procédé selon l'une des revendications précédentes,
caractérisé en ce qu'il comprend :
- un multiplexeur (11) permettant de sélectionner des groupes d'équipotentielles de l'équipement à tester,
- un circuit de calcul et de contrôle (12) assurant les communications avec l'équipement et contrôlant le déroulement des séquences de test, et
- une mémoire (13) dans laquelle sont stockées les valeurs de référence des sommes de contrôle.

9. Dispositif selon la revendication 8,
caractérisé en ce que le circuit de calcul et de contrôle (12) comprend :
- un micro-contrôleur (6) apte à assurer les communications avec l'équipement à tester, à contrôler le déroulement des tests, à effectuer les comparaisons des sommes de contrôle calculées avec les valeurs de référence stockées dans la mémoire (13),
- un circuit logique (17) de calcul de sommes de contrôle,
- un bus (21) assurant la connexion du micro-contrôleur (16) avec la sortie du circuit logique de calcul (17), l'interface de commande du multiplexeur (11), et la mémoire (13), et
- un compteur (18) servant à la mesure du temps d'exécution des séquences de test en mode primaire.

10. Dispositif selon l'une des revendications 8 et 9,
caractérisé en ce que le micro-contrôleur (16) émet un signal d'interruption vers un processeur dudit équipement si la somme de contrôle calculée ne correspond pas à la valeur de référence correspondante stockée dans ladite mémoire (13).

11. Dispositif selon l'une des revendications 9 et 10,
caractérisé en ce que le micro-contrôleur (16) émet un signal d'interruption vers un processeur dudit équipement si, en mode primaire le compteur a détecté que le temps normal d'exécution des tests est dépassé.

12. Dispositif selon l'une des revendications 8 à 11,
caractérisé en ce que la mémoire (13) contient une multiplicité d'ensembles de données regroupant :
- un numéro de test permettant à l'équipement à tester de sélectionner les signaux à observer durant la séquence de test,
- la liste des numéros des équipotentielles du groupe d'équipotentielles à tester,
- le numéro de l'équipotentielle fournissant le signal d'horloge d'échantillonnage, et
- la valeur de la somme de contrôle de référence.

## Patentansprüche

1. Verfahren zur Meldung von Störungen bei einer elektronischen Ausrüstung, das von einer Kontrollvorrichtung (10) durchgeführt wird, die mit den Äquipotentialflächen der Ausrüstung verbundene Mittel (11) zur Signalauswahl, Steuermittel (12) und Mittel zur Berechnung von Kontrollsummen und zum Vergleich aufweist,
dadurch gekennzeichnet, daß es wenigstens eine Testsequenz aufweist, mit:
- Auswahl eines Prüftaktsignals und einer Gruppe von Äquipotentialflächen, die mit einer Äquipotentialfläche verbunden ist, welche das Prüftaktsignal liefert,
- Eichung der Signale, welche die Äquipotentialflächen der ausgewählten Gruppe durchlaufen, auf den Takt des ausgewählten Taktsignals während einer vorbestimmten Dauer,
- Berechnung einer Kontrollsumme anhand der geeichten Signale,
- Vergleich der berechneten Kontrollsumme mit einem Bezugswert, der in einen Speicher (13) der Kontrollvorrichtung (10) eingelesen wurde, und
- Aussenden eines Störsignals, wenn bei dem Vergleich ein Unterschied festgestellt wird.

2. Verfahren nach Anspruch 1, dadurch gekennzeichnet, daß es umfaßt:
- einen primären Modus, der durch das Inspannungsetzen der Ausrüstung ausgelöst wird und in dessen Verlauf die Testsequenz nacheinander für eine Gruppe von vorbestimmten Funktionen der Ausrüstung abläuft, und
- einen erweiterten Modus, der durch die Ausrüstung ausgelöst wird, um die Testsequenz für eine Funktion und während einer Dauer, die von der Ausrüstung angezeigt werden, ablaufen zu lassen.

3. Verfahren nach einem der Ansprüche 1 und 2, dadurch gekennzeichnet, daß es die Berechnung einer Gesamtkontrollsumme, ausgehend von den infolge der Ausführung einer Reihe von Testsequenzen erhaltenen Kontrollsummen, umfaßt.

4. Verfahren nach einem der vorhergehenden Ansprüche 2 und 3, dadurch gekennzeichnet, daß es im erweiterten Modus umfaßt: das Aussenden eines Aktivierungsbefehls durch die zu testende Ausrüstung, der eine Testsequenz auslöst, in deren Verlauf nach und nach eine Kontrollsumme berechnet wird, und anschließend das Aussenden eines Deaktivierungsbefehls durch die Ausrüstung, der den Vergleich der berechneten Kontrollsumme mit dem entsprechenden in den Speicher (13) eingelesenen Bezugswert auslöst.

5. Verfahren nach einem der vorhergehenden Ansprüche, dadurch gekennzeichnet, daß es das Aussenden eines Befehls zum Abbruch der gerade ablaufenden Testsequenz durch die zu testende Ausrüstung umfaßt, falls die gerade mittels der Ausrüstung in Ausführung begriffene Programmsequenz unterbrochen wird, um eine andere Aufgabe auszuführen.

6. Verfahren nach einem der vorhergehenden Ansprüche, dadurch gekennzeichnet, daß es das Aussenden des Wertes der berechneten Kontrollsumme durch die Kontrollvorrichtung (10) an die zu testende Ausrüstung umfaßt.

7. Verfahren nach einem der vorhergehenden Ansprüche, dadurch gekennzeichnet, daß es zur Berechnung der Kontrollsummen eine Rechenmethode vom Typ CRC (Cyclic Redundancy Check) anwendet, die darin besteht, polynomische Divisionen der Meßwerte der empfangenen Signale durch ein Primzahl-Polynom durchzuführen.

8. Vorrichtung zur Durchführung des Verfahrens nach einem der vorhergehenden Ansprüche, dadurch gekennzeichnet, daß sie aufweist:
- einen Multiplexer (11), der die Auswahl der Gruppen von Äquipotentialflächen der zu testenden Ausrüstung ermöglicht,
- einen Rechen- und Steuerschaltkreis (12), der die Kommunikation mit der Ausrüstung sicherstellt und den Ablauf der Testsequenzen steuert, und
- einen Speicher (13), in dem die Bezugswerte der Kontrollsummen gespeichert sind.

9. Vorrichtung nach Anspruch 8, dadurch gekennzeichnet, daß der Rechen- und Steuerschaltkreis (12) umfaßt:
- einen Mikrocontroller (6), der zur Sicherstellung der Kommunikation mit der zu testenden Ausrüstung, zur Steuerung des Ablaufs der Tests und zur Durchführung der Vergleiche der berechneten Kontrollsummen mit den im Speicher (13) gespeicherten Bezugswerten befähigt ist,
- einen Logik-Schaltkreis (17) zur Berechnung von Kontrollsummen,
- einen Bus (21), der die Verbindung des Mikrocontrollers (16) mit dem Ausgang des Logik-Schaltkreises (17), mit der Schnittstelle zur Steuerung des Multiplexers (11) und mit dem Speicher (13) gewährleistet, und
- einen Zähler (18), der zur Bestimmung der Ausführungszeit der Testsequenzen im primären Modus dient.

10. Vorrichtung nach einem der Ansprüche 8 und 9, dadurch gekennzeichnet, daß der Mikrocontroller (16) ein Unterbrechungssignal an einen Prozessor der Ausrüstung sendet, wenn die berechnete Kontrollsumme nicht dem entsprechenden Bezugswert entspricht, der im Speicher (13) gespeichert ist.

11. Vorrichtung nach einem der Ansprüche 9 und 10, dadurch gekennzeichnet, daß der Mikrocontroller (16) ein Unterbrechungssignal an einen Prozessor der Ausrüstung sendet, wenn der Zähler im primären Modus festgestellt hat, daß die normale Zeit zur Ausführung der Tests überschritten ist.

12. Vorrichtung nach einem der Ansprüche 8 bis 11, dadurch gekennzeichnet, daß der Speicher (13) eine Vielzahl von Dateien umfaßt, worin
- eine Testnummer, die es der zu testenden Ausrüstung gestattet, die während der Testsequenz zu beobachtenden Signale auszuwählen,
- die Liste mit den Nummern der Äquipotentialflächen der zu testenden Gruppe von Äquipotentialflächen,
- die Nummer der Äquipotentialfläche, die das Prüftaktsignal liefert, und
- der Wert der Bezugskontrollsumme gruppiert sind.

## Claims

1. A method for the detection of failures in electronic equipment, implemented by a control device (10) comprising a signal selecting means (11) connected to the equipotential surfaces of said equipment, a means (12) for commanding and checksums computing and comparing means, characterized in that it includes at least one test sequence comprising:
- the selecting of a sampling clock signal and of a group of equipotential surfaces associated with an equipotential surface which supplies the sampling clock signal,
- the sampling, at the rhythm of said clock signal and for a predetermined duration, of the signals transiting in the equipotential surfaces of the selected group,
- the computing of a checksum from the sampled signals,
- the comparing of the computed checksum with a reference value read in a memory (13) of the control device (10), and
- the transmitting of a fault signal in the event of said comparison revealing a variance.

2. The method as claimed in claim 1, characterized in that it comprises :
- a primary mode triggered by the powering up of said equipment during which said test sequence is carried out successively on a predetermined set of functions of said equipment, and
- a sophisticated mode triggered by said equipment to carry out said test sequence on one function and for a duration indicated by said equipment.

3. The method as claimed in one of claims 1 and 2, characterized in that it comprises the computing of an overall checksum from the checksums obtained further to performance of a series of test sequences.

4. The method as claimed in one of the preceding claims 2 and 3, characterized in that it comprises, in the sophisticated mode, transmission by the equipment to be tested of an activation order triggering a test sequence during which a checksum is gradually computed, followed by the transmission by said equipment of a deactivation order which triggers the comparing of said computed checksum with the corresponding reference value read in said memory (13).

5. The method as claimed in one of the preceding claims, characterized in that it comprises the transmission, by the equipment to be tested, of an order to abandon the test sequence in process, in the event of the current program sequence being interrupted to carry out another task.

6. The method as claimed in one of the preceding claims, characterized in that it comprises the transmission, by said control device (10) to said equipment to be tested, of the value of said computed checksum.

7. The method as claimed in one of the preceding claims, characterized in that, in order to compute the checksums, it uses a CRC (Cyclic Redundancy Check) type computing technique consisting in carrying out polynomial divisions of the sample signals received, by means of a primary polynomial.

8. A device for implementing the method according to one of the preceding claims, characterized in that it comprises:
- a multiplexer (11) enabling the selection of the groups of equipotential surfaces of the equipment to be tested,
- a control and computing circuit (12) ensuring the communications with the equipment and monitoring the performance of said test sequences, and
- a memory (13) in which the reference values of said checksums are stored.

9. The device as claimed in claim 8, characterized in that said control and computing circuit (12) comprises:
- a microcontroller (6) capable of ensuring communications with said equipment to be tested, of monitoring the performance of said tests, of conducting comparisons between said computed checksums and said reference values stored in said memory (13),
- a logic circuit (17) for computing said checksums,
- a bus (21) ensuring the connection of said microcontroller (16) with the output of the logic computing circuit (17), the multiplexer (11) control interface, and the memory (13), and
- a counter (18) serving to measure the performance time of said test sequences in said primary mode.

10. The device as claimed in one of claims 8 and 9, characterized in that said microcontroller (16) transmits an interrupt signal to a processor of said equipment if said computed checksum does not correspond to the corresponding reference value stored in said memory (13).

11. The device as claimed in one of claims 9 and 10, characterized in that said microcontroller (16) transmits an interrupt signal to a processor of said equipment if, in the primary mode, said counter has detected an exceeding of the normal duration of performance of said tests.

12. The device as claimed in one of claims 8 to 11, characterized in that said memory (13) contains a multiplicity of data sets grouping together:
- a test number enabling said equipment to be tested to select the signals to be observed during said test sequence,
- the list of the numbers of the equipotential surfaces in the group of equipotential surfaces to be tested,
- the number of the equipotential surface supplying the sampling clock signal, and
- the value of the reference checksum.
